# EUROPEAN PATENT APPLICATION

(11) **EP 1 566 304 A1**
(43) Date of publication of application: **24.08.2005**
(21) Application number: 04425108.0
(22) Date of filing: 23.02.2004
(51) Int. Cl.: B60K 15/01, F02M 37/00

(54) **Fuel suction system for a motor vehicle**

(71) Applicant: SAME DEUTZ-FAHR GROUP S.p.A., 24047 Treviglio (Bergamo) (IT)
(72) Inventor: Della Valle, Ernesto, 24047 Treviglio (Bergamo) (IT); Severgnini, Paolo, 24047 Treviglio (Bergamo) (IT)
(74) Representative: Marchitelli, Mauro

(57) **Abstract**

A fuel suction system for a motor vehicle, comprising at least two suction conduits (18, 19) provided with respective electrically actuated valves (20, 22) each having a closed position and an open position and at least two level sensors (24, 26) each associated to a respective valve (20, 22) and able to provide electrical signals which command the closure of the respective valves (20, 22) when the sensed fuel level drops below a predetermined threshold.

## Description

The present invention relates to a fuel suction system for a motor vehicle.

The present invention was developed in particular in view of its application to an agricultural tractor. Agricultural tractors are often subjected, in operation, to far greater longitudinal and/or transverse inclinations than those of vehicles for road use. With known fuel suction systems, suction can be difficult under particular conditions of longitudinal/transverse inclination of the vehicle when the tank is not completely full.

The object of the present invention is to provide a fuel suction system that allows to draw the fuel from the tank under any condition of motion of the vehicle and to use all the fuel present in the tank, increasing vehicle range.

According to the present invention, said object is achieved by a suction system having the characteristics set out in the main claim.

The suction system according to the present invention comprises at least two suction conduits provided with respective electrically actuated valves, each having a closed position and an open position, and at least two level sensors, each associated to a respective valve and able to provide electrical signals which command the closure of the respective valves when the sensed fuel level drops below a predetermined threshold.

As shall become readily apparent from the description that follows, the system according to the present invention allows to draw fuel under any condition of motion of the vehicle and prevents the formation of air bubbles in the fuel suction conduits. The system according to the invention also allows to design tanks with extreme shapes, without worrying about compromising fuel suction and the quantity of unused fuel.

Further characteristics and advantages of the system according to the present invention shall become readily apparent from the detailed description that follows, provided purely by way of non limiting example, with reference to the accompanying drawings, in which:
- Figure 1 is a schematic lateral view of a suction system according to the present invention,
- Figure 2 is a block diagram of the suction system according to the invention, and
- Figures 3 and 4 are schematic views illustrating in enlarged scale the part indicated by the arrow III in Figure 1, respectively under conditions over flat terrain and with the vehicle inclined.

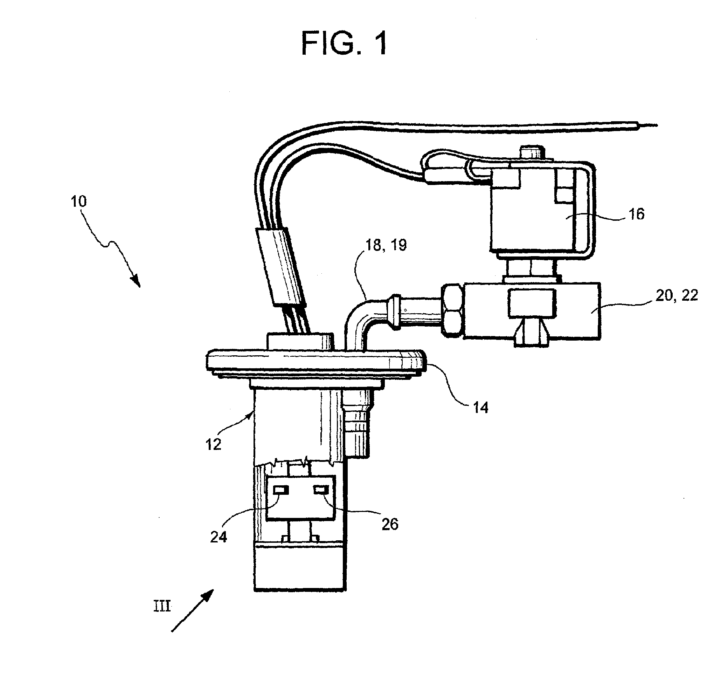

With reference to Figure 1, the number 10 designates a fuel suction system for the tank of a motor vehicle, in particular of an agricultural tractor. The suction system 10 comprises a plenum chamber 12 provided with a lid 14.

The suction system 10 comprises a suction pump 16 connected to the plenum chamber 12 by two or more suction conduits 18, 19 arranged in parallel with each other. Each suction conduit 18, 19 is provided with a respective electrically controlled valve 20, 22.

Inside the plenum chamber 12 are housed two or more level sensors 24, 26. Preferably, the sensors 24, 26 are of the float type, each of which is able to provide an electrical signal which indicates whether the level of the fuel inside the plenum chamber 12 is higher or lower than a predetermined threshold. The sensors 24, 26 are preferably of the ON/OFF type, i.e. capable of indicating only whether the fuel level is above or below the reference threshold.

The level sensors 24, 26 are connected to the respective electrically actuated valves 20, 22. Each level sensor 24, 26 provides an electrical signal which commands the closure of the respective valve 20, 22 when the sensed fuel level drops below the predetermined reference threshold.

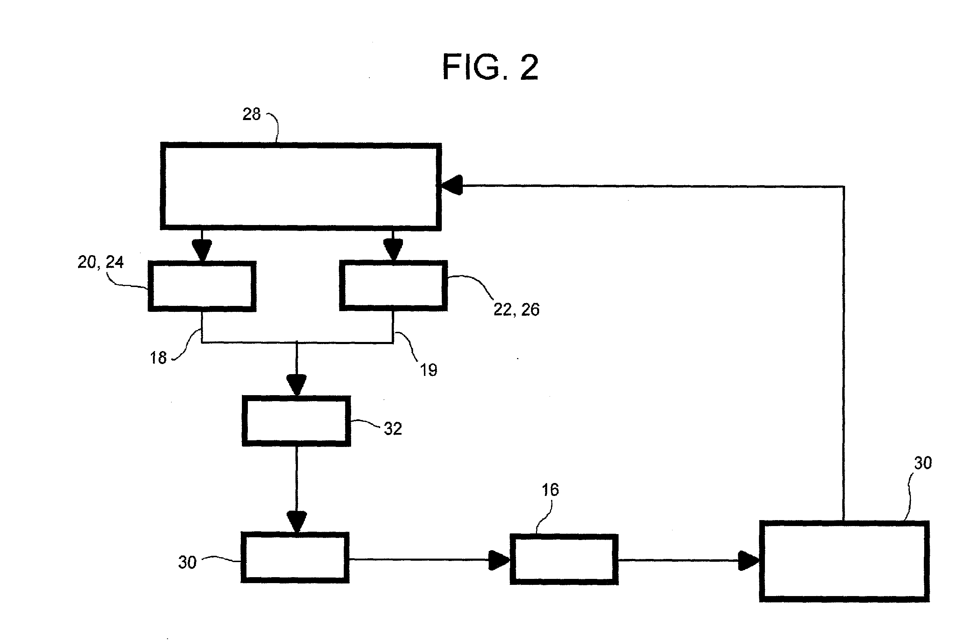

Figure 2 schematically shows the system according to the invention applied to a motor vehicle comprising a tank 28 and an internal combustion engine 20. The assemblies designated by the reference numbers 20, 24 and 22, 26 indicate level sensor/electrical valve set. The electrical valves can be mounted directly on the level sensor with the two distinct components, or a single body could be provided with electrical valve incorporated in the float. The electrical valves can be of the normally opened or normally closed type. The system shown schematically in Figure 2 comprises a fuel filter 30 and a pre-filter 32 arranged in series upstream of the suction pump 16.

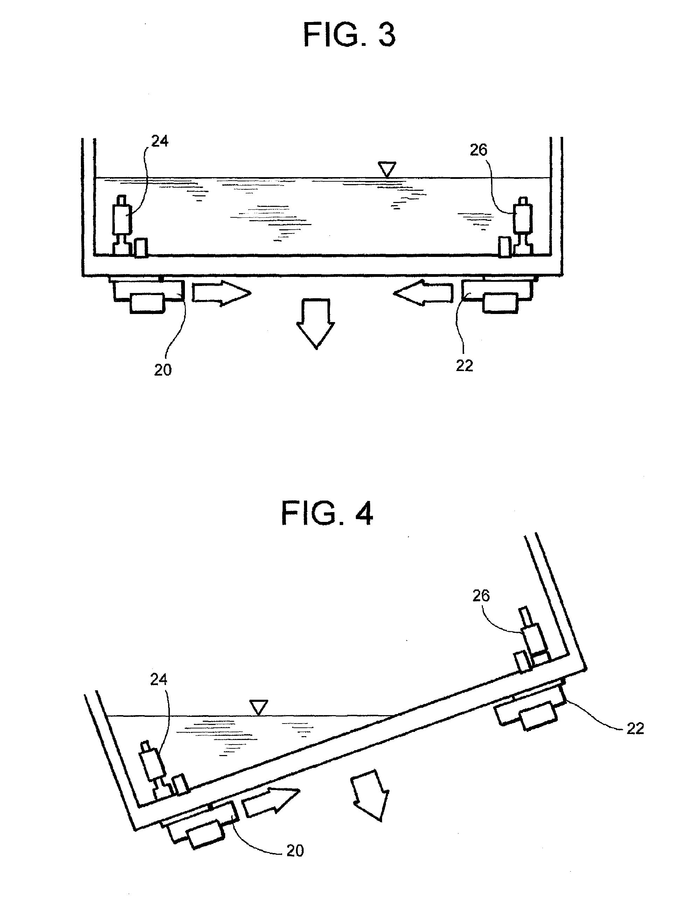

With reference to Figures 3 and 4, when the vehicle moves over flat terrain (Figure 3) the two floats (24, 26) both sense the presence of the fuel and command the opening of the electrical valves 20, 22. In this condition the fuel is drawn through both suction conduits 18, 19.

Supposing that the vehicle is in a condition of longitudinal or transverse inclination (Figure 4), one of the two floats, for example the float 26, no longer senses the presence of fuel so it commands the closure of the respective electrical valve 22. The floats are preferably calibrated in such a way as to command the closure of the respective electrical valve when the related suction conduit is still full of fuel. In this way, the suction of air into the conduit is prevented.

It will therefore be readily apparent that the system according to the invention allows the suction of fuel even in the conditions of travel in which a traditional suction system would have problems. The system according to the invention allows to increase the range of the vehicle and to minimise the unused volume of the tank. Consequently, the designer is free to devise tanks with the most extreme shapes without worrying about compromising the suction of the tank. Moreover, under any operating condition of the vehicle the circulation of air in the fuel suction system is prevented.

## Claims

1. A fuel system for a motor vehicle, **characterised in that** it comprises at least two suction conduits (18, 19) provided with respective electrically actuated valves (20, 22), each having a closed position and an open position and at least two level sensors (24, 26) each associated with a respective valve (20, 22) and able to provide electrical signals which command the closure of the respective valves (20, 22) when the sensed fuel level drops below a predetermined threshold.

2. A fuel suction system as claimed in claim 1,
**characterised in that** the level sensors (24, 26) provide an ON/OFF level signal.

3. A fuel suction system as claimed in claim 1, **characterised in that** the level sensors (24, 26) are of the float type.

4. A fuel suction system as claimed in any of the previous claims, **characterised in that** the sensor levels (24, 26) command the closure of the respective electrical valves (20, 22) when the respective suction conduits (18, 19) are still full of fuel.

5. A fuel suction system as claimed in claim 1, **characterised in that** each electrically actuated valve (20, 22) is mounted on the respective level sensor (24, 26) or is formed in a single body with the respective level sensor (24, 26).
